# EUROPEAN PATENT APPLICATION

(11) **EP 3 300 138 A1**
(43) Date of publication of application: **28.03.2018**
(21) Application number: 16796261.2
(22) Date of filing: 22.04.2016
(51) Int. Cl.: H01M 2/12, H01M 2/04, H01M 2/18, H01M 2/34

(54) **RECTANGULAR SECONDARY BATTERY**

(30) Priority: 18.05.2015 JP 2015100925
(71) Applicant: Hitachi Automotive Systems, Ltd., Hitachinaka-shi Ibaraki 312-8503 (JP)
(72) Inventor: UNNO Akira, Hitachinaka-shi Ibaraki 312-8503 (JP); KAJIWARA Kouichi, Hitachinaka-shi Ibaraki 312-8503 (JP); EGAWA Hiroaki, Hitachinaka-shi Ibaraki 312-8503 (JP)
(74) Representative: MERH-IP Matias Erny Reichl Hoffmann Patentanwälte PartG mbB
(86) International application number: PCT/JP2016/062692
(87) International publication number: WO 2016/185867

(57) **Abstract**

The purpose of the present invention is to allow a gas to be stably discharged from a cracking valve even if a battery lid is deformed toward a wound group side. In a rectangular secondary battery 100 of the present invention, a curved surface portion 3a of a flat wound group 3 is disposed on the side of an opening 11 of a battery can 1, and the opening 11 is sealed with a battery lid 8 having a cracking valve 81 and a liquid injection port 82. At least a protruding portion 54A having a facing surface positioned on a curved surface portion 3a side with respect to the cracking valve 81 is disposed on the battery lid 8 between the liquid injection port 82 and the cracking valve 81.

## Description

### Technical Field

The present invention relates to a rectangular secondary battery having a gas discharge valve.

### Background Art

In a rectangular secondary battery such as a lithium ion secondary battery, a wound electrode group as a power generating element is housed in a battery can formed of a metal such as aluminum, and an electrolytic solution is injected into the battery can. The battery can includes a peripheral side surface and a bottom surface, and one surface of an upper portion of the battery can is opened. The peripheral side surface is generally formed in a rectangular cross-sectional shape having a pair of wide side surfaces and a pair of narrow side surfaces connected to the wide side surfaces. After the wound group is housed, an upper opening of the battery can is sealed with a battery lid provided with external terminals of positive and negative electrodes. An electrolytic solution is injected into the battery can from a liquid injection port of the battery lid. The battery lid is insulated from the positive and negative electrode external terminals. The battery can and the battery lid have a different potential from that of the positive or negative electrode, and have neutrality with no polarity.

The battery lid is provided with a cracking valve. The cracking valve is cracked when the internal pressure of the battery can is increased, which discharges a gas from the inside of the battery can to reduce the internal pressure. By stabilizing the discharge of the gas from the cracking valve, the safety of the battery can be improved. For the purpose of stabilizing the discharge of the gas, for example, there has been proposed a technique of providing an insulator having a plurality of openings serving as a gas flow path so as to cover the cracking valve between each of the battery lid and the cracking valve, and the wound group (PTL 1).

### Citation List

### Patent Literature

PTL 1: JP-2013-025882-A

### Summary of Invention

### Technical Problem

The technique shown in PTL 1 makes it possible to stably discharge a gas when the gas occurs in a state where the battery lid is not deformed. However, when the battery lid is deformed toward the wound group side, the insulator having a plurality of openings serving as a gas flow path is pressed against the wound group, and most of the plurality of openings serving as a gas flow path are blocked by the wound group, so that the gas does not flow. In a battery having an ordinary constitution having no gas discharge stabilizing structure of PTL 1, a cracking valve is blocked by a wound group when a battery lid is deformed toward a wound group side to cause the cracking valve of the battery lid to abut on the wound group, resulting in a state where a gas cannot be discharged.

The deformation of the battery lid occurs, for example, when the battery is compressed from the lid side. In a rectangular battery, particularly, the peripheries of the cracking valve and liquid injection port of a battery lid are apt to be deformed. Particularly, in a module in which a plurality of batteries are combined, a gas discharge duct is connected to a cracking valve provided in the center of a battery lid. Therefore, when the module is deformed in an accident or the like, there is a high possibility that the battery lid is deformed through the gas discharge duct.

The present invention has been made in view of the above problems, and the purpose of the present invention is to provide a rectangular secondary battery which allows a gas to be stably discharged from a cracking valve even if a battery lid is deformed toward a wound group side.

### Solution to Problem

In order to solve the above problem, a rectangular secondary battery of the present invention includes: a battery can; a flat wound group including a curved surface portion disposed on a side of an opening of the battery can; and a battery lid sealing the opening and having a cracking valve and a liquid injection port, wherein at least a protruding portion is disposed on the battery lid between the liquid injection port and the cracking valve, and the protruding portion has a facing surface positioned on a curved surface portion side with respect to the cracking valve.

### Advantageous Effects of Invention

According to the present invention, even if the battery lid is deformed toward the wound group side, the facing surface of the protruding portion abuts on the curved surface portion of the wound group, so that the cracking valve can be prevented from being blocked by the wound group. Therefore, a gas flow path is secured between a gas ejecting portion of the flat wound group and the cracking valve, so that a gas can be stably discharged from the cracking valve. Problems, configurations, and effects other that those described above will become apparent from the following description of embodiments.

### Brief Description of Drawings

[FIG. 1] FIG. 1 is an external perspective view of a rectangular secondary battery.
[FIG. 2] FIG. 2 is an exploded perspective view of the rectangular secondary battery.
[FIG. 3] FIG. 3 is an exploded perspective view of a wound electrode group.
[FIG. 4] FIG. 4 is a perspective view illustrating the internal structure of a rectangular secondary battery in Example 1.
[FIG. 5] FIG. 5 illustrates the structure of an insulating plate in Example 1.
[FIG. 6] FIG. 6 illustrates the assembly state of a gas discharge duct in an assembled battery in Example 1.
[FIG. 7] FIG. 7 illustrates the structure of an insulating plate in Example 2.
[FIG. 8] FIG. 8 illustrates the structure of an insulating plate in Example 3.
[FIG. 9] FIG. 9 illustrates the structure of an insulating plate in Example 4.
[FIG. 10] FIG. 10 illustrates the structure of a battery lid in Example 5.

### Description of Embodiments

Examples of the present invention will be described below with reference to the drawings.

### [Example 1]

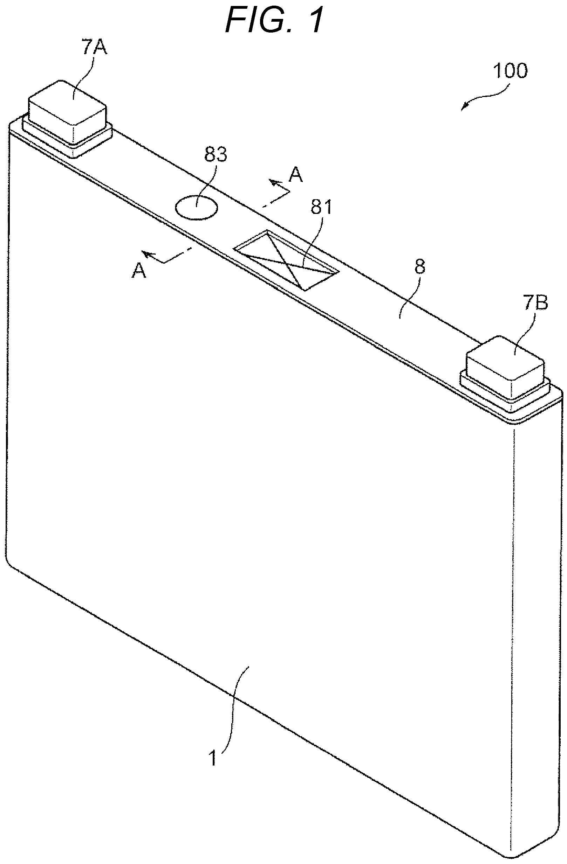

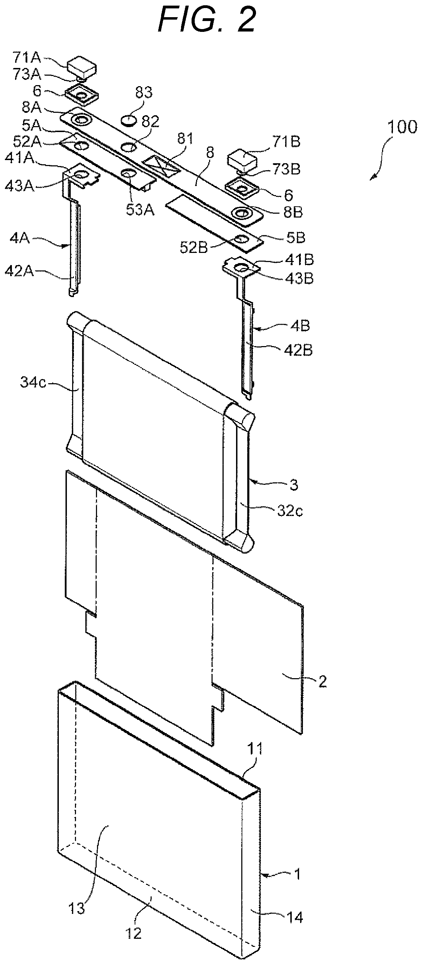

In the present example, an example of a rectangular secondary battery 100 to which the present invention is applied will be described. FIG. 1 is an external perspective view of a rectangular secondary battery, and FIG. 2 is an exploded perspective view of the rectangular secondary battery. The rectangular secondary battery 100 includes a metal battery can 1 and a battery lid 8. The battery can 1 includes an oblong bottom surface 12 having a pair of long side portions and a pair of short side portions, a pair of wide side surfaces 13 having a relatively large area in succession with the pair of long side portions of the bottom surface 12 and facing each other, and a pair of narrow side surfaces 14 having a relatively small area in succession with the pair of shorter sides of the bottom surface 12 and facing each other. An opening 11 is formed in an upper portion opposite to the bottom surface 12.

A flat wound group 3 is housed in the battery can 1, and the opening 11 of the battery can 1 is sealed with the battery lid 8. The battery lid 8 has a flat plate shape having a substantially oblong shape in plan view, and has a size closing the opening 11. The peripheral edge of the battery lid 8 is welded to the opening edge of the opening 11. The battery lid 8 is provided with a positive electrode terminal 7A and a negative electrode terminal 7B as external terminals. The flat wound group 3 is charged via the positive electrode terminal 7A and the negative electrode terminal 7B. Power is supplied to an external load via the positive electrode terminal 7A and the negative electrode terminal 7B. The positive electrode terminal 7A and the negative electrode terminal 7B are disposed apart on one side and other side in the longitudinal direction of the battery lid 8. On the battery lid 8, a cracking valve 81 is integrally provided. When the internal pressure of a battery container is increased, the cracking valve 81 is cracked to discharge a gas from the inside of the battery can 1, so that the internal pressure of the battery can 1 is reduced. As a result, the safety of the rectangular secondary battery 100 is secured. The cracking valve 81 is disposed at a center position in the longitudinal direction of the battery lid 8.

In the battery can 1, the flat wound group 3 is housed with an insulating protective film 2 interposed therebetween. Since the flat wound group 3 is wound in a flat form, the flat wound group 3 includes a pair of curved surface portions each having a semicircular cross-sectional shape and facing each other and a flat surface portion continuously formed between the pair of curved surface portions. The flat wound group 3 is inserted into the battery can 1 from one curved surface portion side so that a winding axis direction extends along the lateral width direction of the battery can 1, and the other curved surface portion side is disposed on the opening 11 side.

A positive electrode metal foil exposing portion 34c of the flat wound group 3 is electrically connected to the positive electrode terminal 7A via a positive electrode current collector plate 4A. A negative electrode metal foil exposing portion 32c of the flat wound group 3 is electrically connected to the negative electrode terminal 7B via a negative electrode current collector plate 4B. As a result, power is supplied from the flat wound group 3 to an external load via the positive electrode current collector plate 4A and the negative electrode current collector plate 4B, and external generated power is supplied to the flat wound group 3 via the positive electrode current collector plate 4A and the negative electrode current collector plate 4B to charge the flat wound group 3.

In order to electrically insulate the positive electrode current collector plate 4A and the negative electrode current collector plate 4B, and the positive electrode terminal 7A and the negative electrode terminal 7B from the battery lid 8 respectively, a gasket 6, a positive electrode insulating plate 5A, and a negative electrode insulating plate 5B are provided on the battery lid 8. Examples of a material for forming the positive electrode terminal 7A and the positive electrode current collector plate 4A include an aluminum alloy. Examples of a material for forming the negative electrode terminal 7B and the negative electrode current collector plate 4B include a copper alloy. Examples of a material for forming the gasket 6 include insulating resin materials such as polybutylene terephthalate, polyphenylene sulfide, and perfluoroalkoxy fluorine resin.

A liquid injection port 82 for injecting an electrolytic solution into the battery can 1 is formed in the battery lid 8. The liquid injection port 82 is positioned between the positive electrode terminal 7A and the cracking valve 81. The liquid injection port 82 is sealed with a liquid injection plug 83 after the injection of the electrolytic solution into the battery can 1. Herein, for example, as the electrolytic solution to be injected into the battery can 1, a nonaqueous electrolytic solution obtained by dissolving a lithium salt such as lithium hexafluorophosphate (LiPF₆) in a carbonate ester-based organic solvent such as ethylene carbonate can be applied.

The positive electrode terminal 7A and the negative electrode terminal 7B include rectangular terminal head portions 71A and 71B which are exposed to the outside and are welded and joined to a bus bar or the like. Shaft portions 73A and 73B are respectively provided to protrude from the lower surfaces of the terminal head portions 71A and 71B. The shaft portions 73A and 73B are inserted through openings 8A and 8B of the battery lid 8 to protrude to the inner portion side of the battery can 1 with respect to a positive electrode current collector plate base portion 41A and negative electrode current collector plate base portion 41B of the positive electrode current collector plate 4A and negative electrode current collector plate 4B. The tips of the shaft portions 73A and 73B are caulked, whereby the positive electrode terminal 7A, the negative electrode terminal 7B, the positive electrode current collector plate 4A, and the negative electrode current collector plate 4B are integrally fixed to the battery lid 8. The gasket 6 is interposed between the positive electrode terminal 7A and the battery lid 8 and between the negative electrode terminal 7B and the battery lid 8. The positive electrode insulating plate 5A and the negative electrode insulating plate 5B are respectively interposed between the positive electrode current collector plate 4A and the battery lid 8 and between the negative electrode current collector plate 4B and the battery lid 8.

The positive electrode current collector plate 4A and the negative electrode current collector plate 4B respectively include the rectangular plate-like positive electrode current collector plate base portion 41A and negative electrode current collector plate base portion 41B disposed in parallel to face the lower surface of the battery lid 8, and a positive electrode side connection end portion 42A and negative electrode side connection end portion 42B bent at the side ends of the positive electrode current collector plate base portion 41A and negative electrode current collector plate base portion 41B, extending toward the bottom surface 12 side along the wide side surface 13 of the battery can 1, and connected to the positive electrode metal foil exposing portion 34c and negative electrode metal foil exposing portion 32c of the wound group 3. A positive electrode side opening hole 43A and a negative electrode side opening hole 43B through which the shaft portions 73A and 73B are inserted are respectively formed in the positive electrode current collector plate base portion 41A and the negative electrode current collector plate base portion 41B.

The insulating protective film 2 is wound around the flat wound group 3 with a direction along the flat surface of the flat wound group 3 and perpendicular to the winding axis direction of the flat wound group 3 as a center axis direction. The insulating protective film 2 is formed of a single synthetic resin sheet such as PP (polypropylene) or a plurality of film members, and has a length long enough to be wound around the wound group 3 with the direction parallel to the flat surface of the flat wound group 3 and perpendicular to the winding axis direction as the winding center direction.

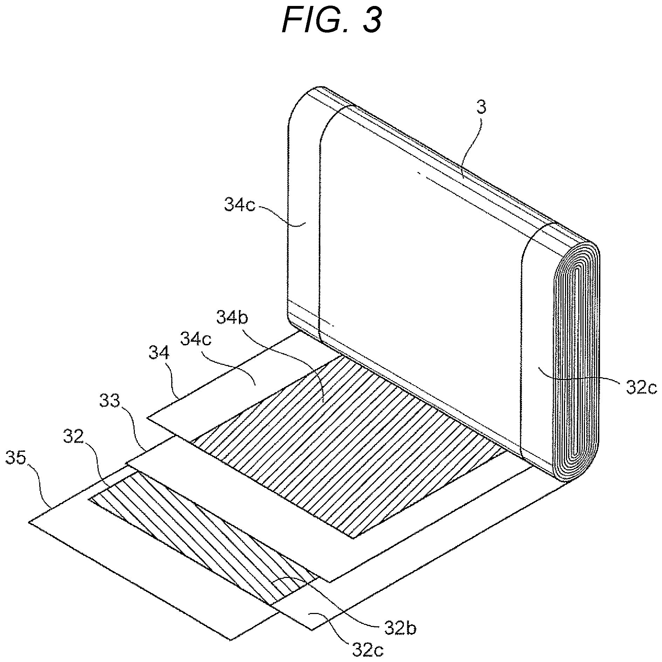

FIG. 3 is an exploded perspective view showing a state where a part of the wound group in Example 1 is developed.

The flat wound group 3 is constituted by winding a negative electrode 32 and a positive electrode 34 in a flat form with separators 33 and 35 interposed therebetween. The negative electrode 32 is wound as the outermost peripheral electrode of the wound group 3, and the separators 33 and 35 are wound outside the outermost negative electrode 32. The separators 33 and 35 serve to insulate the positive electrode 34 from the negative electrode 32.

A portion of the negative electrode 32 coated with a negative electrode mixture layer 32b is wider in the width direction than a portion of the positive electrode 34 coated with a positive electrode mixture layer 34b. Thus, the portion coated with the positive electrode mixture layer 34b is necessarily sandwiched between the portions coated with the negative electrode mixture layer 32b. The positive electrode metal foil exposing portion 34c and the negative electrode metal foil exposing portion 32c are bundled at their flat surface portions and connected to each other by welding or the like. Although the separators 33 and 35 are wider than the portion coated with the negative electrode mixture layer 32b in the width direction, the separators 33 and 35 do not interfere with bundling and welding processes since the separators 33 and 35 are wound at positions where metal foil surfaces are exposed at end portions of the positive electrode metal foil exposing portion 34c and negative electrode metal foil exposing portion 32c.

The positive electrode 34 includes a positive electrode mixture layer 34b having a positive electrode metal foil having each surface coated with a positive electrode active material mixture. A positive electrode metal foil exposing portion 34c which is not coated with a positive electrode active material mixture is provided on one end in the width direction of the positive electrode metal foil. The negative electrode 32 includes a negative electrode mixture layer 32b having a negative electrode metal foil having each surface coated with a negative electrode active material mixture. A negative electrode metal foil exposing portion 32c which is not coated with a negative electrode active material mixture is provided on the other end of the negative electrode metal foil. Each of the positive electrode metal foil exposing portion 34c and the negative electrode metal foil exposing portion 32c is an area where the foil surface of the metal foil is exposed, and is wound so as to be disposed on one side and on the other side in the winding axis direction.

A negative electrode mixture for the negative electrode 32 is produced by adding 10 parts by weight of polyvinylidene fluoride (hereinafter referred to as PVDF) as a binder to 100 parts by weight of an amorphous carbon powder as a negative electrode active material, thereafter adding N-methylpyrrolidone (hereinafter referred to as NMP) as a dispersant solvent to the above chemical substances, and kneading the thus-obtained solution. The negative electrode mixture is coated onto both surfaces of a copper foil (negative electrode metal foil) having a thickness of 10 µm while leaving weld portions (negative electrode uncoated portions). The coating operation is followed by drying, pressing, and cutting to obtain the negative electrode 32 which has a negative electrode active material-coated portion including no copper foil and having a thickness of 70 µm.

In the present example, the case where the amorphous carbon is used as the negative electrode active material is exemplified. However, the kind of the negative electrode active material is not limited thereto. The negative electrode active material may be natural graphite into/from which lithium ions can be inserted/desorbed, various artificial graphite materials, carbonaceous materials such as coke, chemical compounds such as Si and Sn (for example, SiO and TiSi₂ or the like), or a composite material thereof. Examples of the particle shape of the negative electrode active material include, but are not particularly limited to, scale-like, globular, fibrous, and clumpy particle shapes.

A positive electrode mixture for the positive electrode 34 is produced by adding 10 parts by weight of scale-like graphite as an electrically conductive material and 10 parts by weight of PVDF as a binder to 100 parts by weight of lithium manganate (chemical formula: LiMn₂O₄) as a positive electrode active material, thereafter adding NMP as a dispersion solvent to the above chemical substances, and kneading the thus-obtained solution. The positive electrode mixture is coated onto both surfaces of an aluminum foil (positive electrode metal foil) having a thickness of 20 µm while leaving weld portions (positive electrode uncoated portions). The coating operation is followed by drying, pressing, and cutting to obtain the positive electrode 34 which has a positive electrode active material-coated portion including no aluminum foil and having a thickness of 90 µm.

In the present example, the case where the lithium manganate is used as the positive electrode active material is exemplified. However, as the positive electrode active material, there may be used any other lithium manganate having a spinel crystal structure, a lithium-manganese composite oxide partially substituted by or doped with a metal element, lithium cobalt oxide or lithium titanate having a layered crystal structure, or a lithium-metal composite oxide obtained by substituting a part of these oxides by, or doping a part thereof with, a metal element.

In the present example, the case where PVDF is used as the binder of the coated portion in the positive electrode and the negative electrode is exemplified. However, the PVDF may be replaced by, for example, polytetrafluoroethylene (PTFE), polyethylene, polystyrene, polybutadiene, butyl rubber, nitrile rubber, styrene-butadiene rubber, polysulfide rubber, nitrocellulose, cyanoethylcellulose, various kinds of latexes, acrylonitrile, vinyl fluoride, vinylidene fluoride, propylene fluoride, chloroprene fluoride, a polymer of an acrylic resin, etc., and a mixture thereof. For example, a shaft core which can be used is constituted by winding a resin sheet having higher bending rigidity than that of any of the positive electrode metal foil, negative electrode metal foil, and separators 33 and 35.

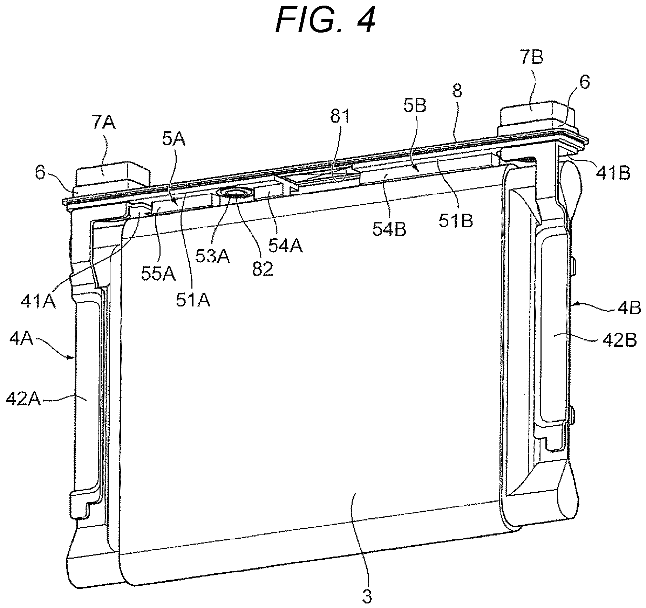

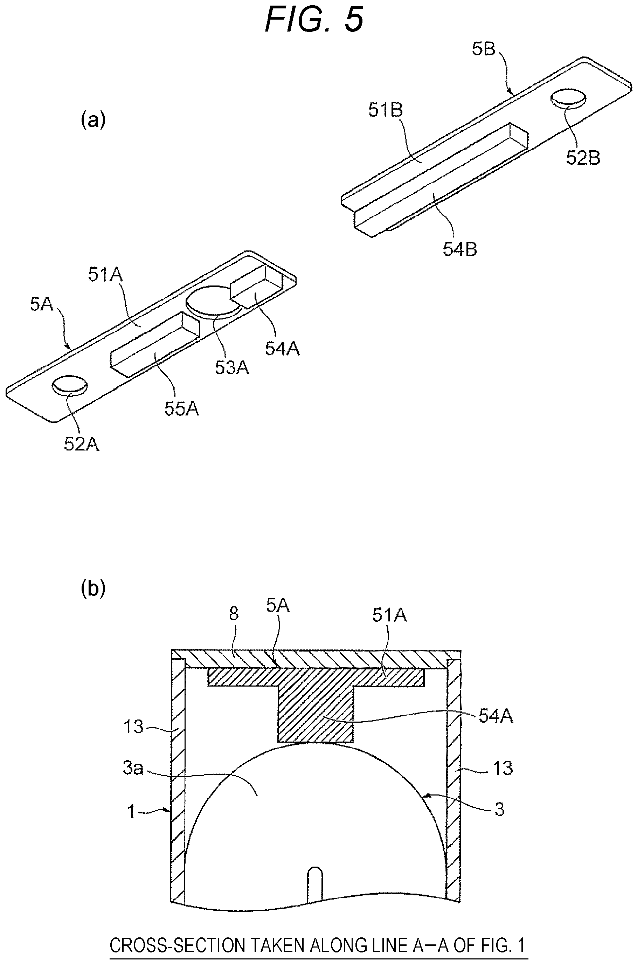

FIG. 4 is a perspective view illustrating the internal structure of a rectangular secondary battery in Example 1. FIG. 5 illustrates the structure of an insulating plate in Example 1. FIG. 5 (a) is a perspective view showing a positive electrode insulating plate and a negative electrode insulating plate, and FIG. 5 (b) is a cross-sectional view taken along line A-A of FIG. 1.

The positive electrode insulating plate 5A and the negative electrode insulating plate 5B have a shape extending toward the direction of the cracking valve 81 of the battery lid 8, and have protruding portions 54A, 55A, and 54B facing a curved surface portion 3a of the flat wound group 3. As shown in FIG. 4, the positive electrode insulating plate 5A includes a base end interposed between the battery lid 8 and the positive electrode current collector plate 4A, extends toward the center in the longitudinal direction of the battery lid 8 along the battery lid 8, and includes a tip disposed at a position adjacent to the cracking valve 10. The negative electrode insulating plate 5B includes a base end interposed between the battery lid 8 and the negative electrode current collector plate 4B, extends toward the center in the longitudinal direction of the battery lid 8 along the battery lid 8, and includes a tip disposed at a position adjacent to the cracking valve 81.

As shown in FIG. 5(a), the positive electrode insulating plate 5A includes an oblong flat plate portion 51A extending along the battery lid 8. The flat plate portion 51A has a terminal opening 52A through which a shaft portion 73A of the positive electrode terminal 7A is inserted, and a liquid injection opening 53A communicating with the liquid injection port 82 of the battery lid 8. The positive electrode insulating plate 5A is provided with protruding portions 54A and 55A as the characteristic constitution of the present invention.

The negative electrode insulating plate 5B includes an oblong flat plate portion 51B extending along the battery lid 8. As shown in FIG. 5(a), a terminal opening 52B through which a shaft portion 73B of the negative electrode terminal 7B passes is formed in the flat plate portion 51B. The negative electrode insulating plate 5B is provided with a protruding portion 54B as the characteristic constitution of the present invention.

The protruding portions 54A, 55A, and 54B are a part of the positive electrode insulating plate 5A which is an insulating member provided between the positive electrode current collector plate 4A and the battery lid 8, and the negative electrode insulating plate 5B which is an insulating member provided between the negative electrode current collector plate 4B and the battery lid 8. The protruding portions 54A, 55A, and 54B are provided integrally on the flat plate portions 51A and 51B. The protruding portions 54A, 55A, and 54B protrude from the flat plate portions 51A and 51B, and have a facing surface facing a curved surface portion 3a and positioned on the curved surface portion 3a side with respect to the cracking valve 81. In the present example, the protruding portions 54A, 55A, and 54B already abut on the curved surface portion 3a in a normal state before the battery lid 8 is deformed, but in the normal state, the protruding portions 54A, 55A, and 54B may face the curved surface portion 3a in a predetermined gap.

The width of the facing surface of each of the protruding portions 54A, 55A, and 54B is smaller than the thickness of the flat wound group 3. In the present example, the protruding portions 54A, 55A, and 54B have the same protrusion height and width. The protruding portions 54A, 55A, and 54B do not only refer to a state where there is a portion protruding from the circumference, but also a shape capable of providing a space serving as a gas flow path when the protruding portions 54A, 55A, and 54B abut on the flat wound group 3 in a state where there is a difference in height between a high portion and a low portion such as one having a depression.

As shown in FIG. 4, the protruding portion 54A is provided on the tip side of the flat plate portion 51A with respect to the liquid injection opening 53A so as to be laterally positioned adjacent to the cracking valve 81 at a position between the cracking valve 81 and the liquid injection port 82. The protruding portion 55A is provided between the liquid injection opening 53A and the terminal opening 52A so as to be positioned between the liquid injection port 82 and the positive electrode current collector plate 4A. The protruding portion 54B is provided between the tip of the flat plate portion 51B and the terminal opening 52B so as to be laterally positioned adjacent to the cracking valve 81 at a position between the negative electrode current collector plate 4B and the cracking valve 81.

As described above, the protruding portions 54A, 55A, and 54B are disposed to face the curved surface portion 3a of the flat wound group 3. In particular, the protruding portion 54A of the positive electrode insulating plate 5A and the protruding portion 54B of the negative electrode insulating plate 5B are disposed at positions adjacent to both sides of the cracking valve 81, respectively. Therefore, even if impact is applied to the rectangular secondary battery 100 to cause the deformation of the battery lid 8 toward the flat wound group 3 side, for example, the blockage of the cracking valve 81 due to the flat wound group 3 caused by the abutment of the battery lid 8 on the flat wound group 3 can be prevented. Therefore, the gas can be stably discharged from the cracking valve 81 by securing the gas flow paths of the gas from the inside of the battery can 1 to the cracking valve 81 on both sides of the cracking valve 81.

The base end of the protruding portion 55A is disposed at a position adjacent to the positive electrode current collector plate base portion 41A of the positive electrode current collector plate 4A, so that a clearance between the current collector plate base portion 41A and the curved surface portion 3a of the flat wound group 3 can be maintained even if the battery lid 8 is deformed toward the flat wound group 3 side. This makes it possible to suppress the occurrence of a short-circuit phenomenon caused by the positive electrode current collector plate base portion 41A of the positive electrode current collector plate 4A hitting the flat wound group 3.

The materials of the positive electrode insulating plate 5A and negative electrode insulating plate 5B are resins such as polypropylene, polyethylene, polyethylene terephthalate, polycarbonate, polybutylene terephthalate, polyphenylene sulfide, polyvinyl chloride, polyvinylidene chloride, polystyrene, and polyacrylonitrile. The positive electrode insulating plate 5A and the negative electrode insulating plate 5B preferably have high rigidity because of serving as a strut between the battery lid 8 and the flat wound group 3.

In the present example, the case where the protruding portions 54A and 54B are provided on both sides of the cracking valve 81 to secure the flow paths on both sides of the cracking valve 81 is described as an example. However, the flow path to the cracking valve 81 can be preferably secured when the battery lid 8 is deformed. The protruding portions 54A and 54B may be provided only at a position adjacent to one side of the cracking valve 81. The rigidity of the portion of the liquid injection port 82 of the battery lid 8 is lowered, so that the battery lid 8 is likely to be deformed. When the projecting portion is provided on one side of the cracking valve 81, the protruding portion 54A is preferably provided on the side on which the liquid injection port 82 is provided, that is, at a position adjacent to the positive electrode side of the cracking valve 81 in the present example.

In the present example, the protruding portions 54A and 55A and flat plate portion 51A of the positive electrode insulating plate 5A constitute an integral part, and the negative electrode insulating plate 5B and the protruding portion 54B constitute an integral part, but the protruding portion and the flat plate portion may be separate parts. When the protruding portion and the flat plate portion are separate parts, the degree of freedom of the material can be improved. The material of a part corresponding to the protruding portion may be a metal (for example, aluminum), and one with high rigidity can be selected. If the material of the part corresponding to the protruding portion is a resin when the protruding portion and the flat plate portion are separate parts, the part is disposed on the battery lid 8 by, for example, integral molding. If the material of the part is a metal, the part is disposed on the battery lid 8 by welding or the like.

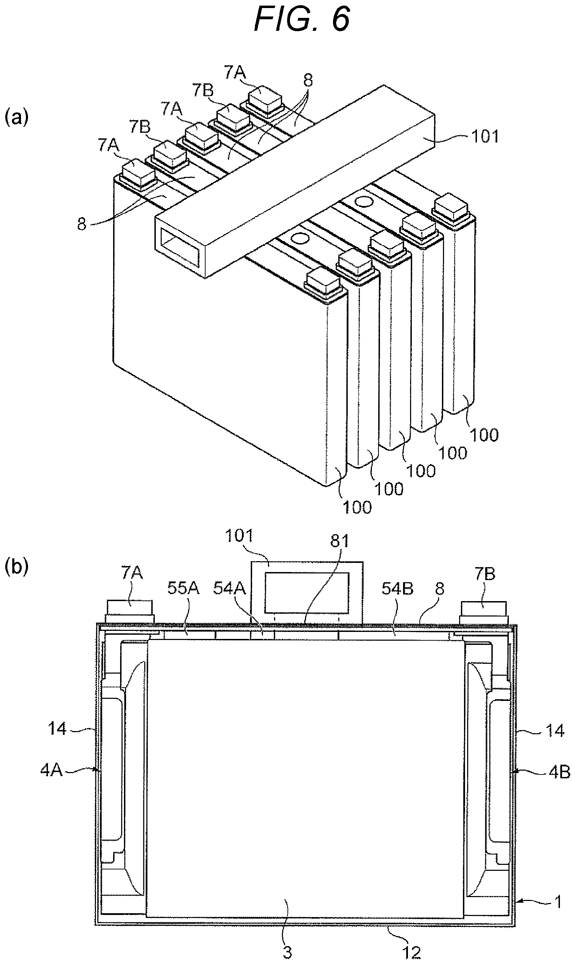

FIG. 6 illustrates the assembly state of a gas discharge duct to an assembled battery in Example 1. FIG. 6(a) is an overall perspective view thereof, and FIG. 6(b) is a front view showing the arrangement image of the gas discharge duct.

A module of an assembled battery obtained by combining a plurality of rectangular secondary batteries 100 to which the present invention is applied includes a gas discharge duct 101 for safely discharging a gas discharged from the cracking valve 81 of the rectangular secondary battery 100 to a specified place. A metal such as iron is often used as a material having high heat resistance for enduring a high temperature gas for the gas discharge duct 101. Since the gas discharge duct 101 made of the metal has higher rigidity than that made of a resin, for example, the battery lid 8 is pressed through the gas discharge duct 101 when a module mounted on a vehicle is deformed in an accident or the like, so that the battery lid 8 may be deformed toward the flat wound group 3 side.

When the deformation occurs, a duct abutting portion on which the gas discharge duct 101 of the battery lid 8 abuts is largely deformed. In the present invention, the protruding portions 54A and 54B of the positive electrode insulating plate 5A and negative electrode insulating plate 5B are disposed on the back side of the duct abutting portion on which at least the gas discharge duct 101 of the battery lid 8 abuts, so that the blockage of the battery lid 8 caused by the abutment of the cracking valve 81 of the battery lid 8 on the flat wound group 3 can be prevented to allow the flow path for effectively discharging the gas from the inside of the battery can 1 to be secured.

### [Example 2]

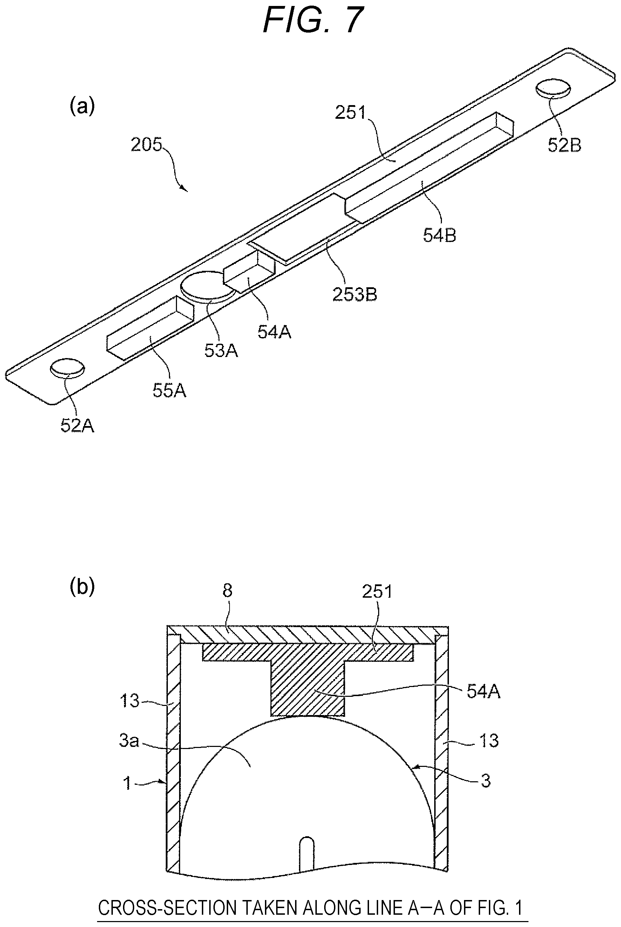

FIG. 7 illustrates the structure of an insulating plate in Example 2. It is to be noted that the same constituent elements as those in the above-described example are denoted by the same reference symbols, to thereby omit the detailed description thereof. The characteristic feature of the present example is that an insulating plate on a positive electrode side and an insulating plate on a negative electrode side constitute one integrally formed part. Protruding portions 54A and 54B provided on both sides of a cracking valve 81 are provided to be connected to each other via an insulating plate 205.

The insulating plate 205 includes an oblong flat plate portion 251 disposed in parallel to face the lower surface of a battery lid 8. One end portion of the flat plate portion 251 is interposed between the battery lid 8 and a positive electrode current collector plate 4A, and the other end portion is interposed between the battery lid 8 and a negative electrode current collector plate 4B. A cracking valve opening 253B communicating with the cracking valve 81 of the battery lid 8 is formed at the center position in the longitudinal direction of the flat plate portion 251. On the insulating plate 205, protruding portions 54A, 54B, and 55A are provided. The protruding portion 54A and the protruding portion 54B are provided separately on one side and the other side via the cracking valve opening 253B so as to be disposed at adjacent positions on both sides of the cracking valve 81.

The present example can advantageously provide less number of parts and a more excellent assembling property than those of the constitution of Example 1 since the insulating plate is not constituted by two parts divided into a positive electrode side and a negative electrode side as in the constitution of Example 1, but constituted by one integrated part. Even if impact is applied to a rectangular secondary battery 100 to cause the battery lid 8 to be deformed toward a flat wound group 3 side, for example, as in Example 1, the blockage of the cracking valve 81 of the battery lid 8 caused by the abutment of the cracking valve 81 of the battery lid 8 on the flat wound group 3 can be prevented, so that gas flow paths for causing a gas in a battery can 1 to reach the cracking valve 81 are secured at both sides of the cracking valve 81 to allow the gas to be stably discharged from the cracking valve 81.

The material of the insulating plate is a resin such as polypropylene, polyethylene, polyethylene terephthalate, polycarbonate, polybutylene terephthalate, polyphenylene sulfide, polyvinyl chloride, polyvinylidene chloride, polystyrene, or polyacrylonitrile. The insulating plate preferably has high rigidity because of serving as a strut between the battery lid 8 and the flat wound group 3.

In the present example, the protruding portions 54A, 54B, and 55A and flat plate portion 251 of the insulating plate 205 constitute an integral part, but the protruding portion and the flat plate portion may be separate parts. When the protruding portion and the flat plate portion are separate parts, the degree of freedom of the material can be improved. The material of a part constituting the protruding portions 54A, 54B, and 55A may be a metal (for example, aluminum), and one with high rigidity can be selected. If the material of the part constituting the protruding portion is a resin when the protruding portion and the flat plate portion are separate parts, the part is disposed on the battery lid 8 by integral molding or the like. If the material of the part is a metal, the part is disposed on the battery lid 8 by welding or the like.

### [Example 3]

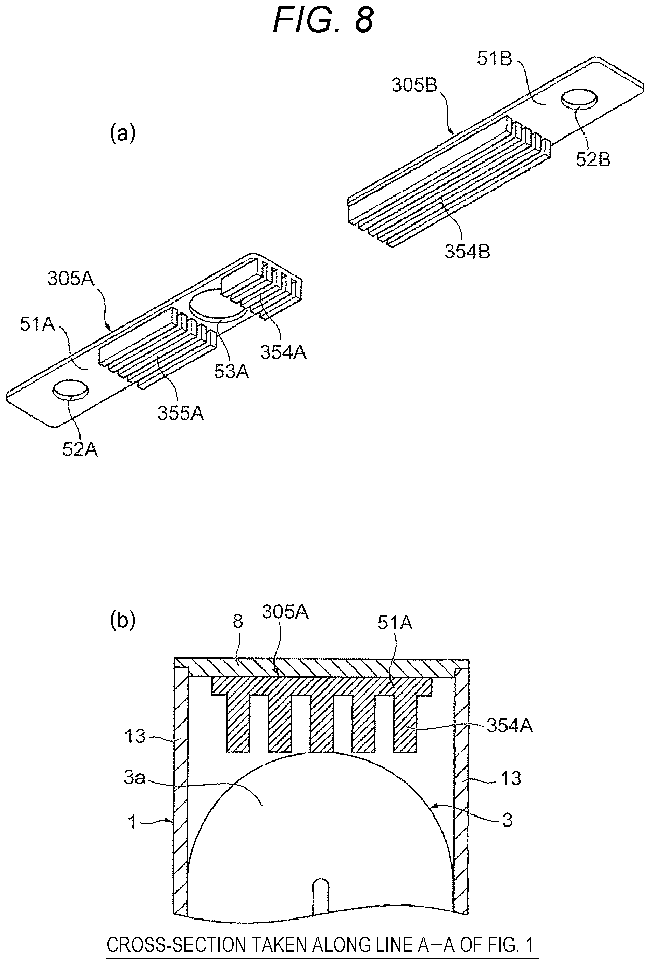

FIG. 8 illustrates the structure of an insulating plate in Example 3. It is to be noted that the same constituent elements as those in the above-described example are denoted by the same reference symbols, to thereby omit the detailed description thereof. The characteristic feature of the present example is that a plurality of protruding portions are provided in parallel.

In the present example, the case where an insulating plate is constituted by two parts, that is, a positive electrode insulating plate 305A and a negative electrode insulating plate 305B will be representatively described. However, as in Example 2, the case where the insulating plate is constituted by one part can also be applied.

The positive electrode insulating plate 305A includes a base end interposed between a battery lid 8 and a positive electrode current collector plate 4A, extends toward the center in the longitudinal direction of the battery lid 8 along the lower surface of the battery lid 8, and includes a tip disposed at a position adjacent to a cracking valve 10. The negative electrode insulating plate 305B includes a base end interposed between the battery lid 8 and a negative electrode current collector plate 4B, extends toward the center in the longitudinal direction of the battery lid 8 along the lower surface of the battery lid 8, and includes a tip disposed at a position adjacent to a cracking valve 81.

Protruding portions 354A, 355A, and 354B are integrally provided on the positive electrode insulating plate 305A and the negative electrode insulating plate 305B. The protruding portions 354A, 355A, and 354B are provided to protrude toward a curved surface portion 3a of a flat wound group 3 from flat plate portions 51A and 51B. A facing surface facing the curved surface portion 3a is positioned on a surface portion 3a side with respect to the cracking valve 81. In the present example, the protruding portions 354A, 355A, and 354B already abut on the curved surface portion 3a in a normal state before the battery lid 8 is deformed, but in the normal state, the protruding portions 354A, 355A, and 354B may face the curved surface portion 3a in a predetermined gap.

The protruding portion 354A is provided on the tip side of the flat plate portion 51A with respect to a liquid injection opening 53A so as to be laterally positioned adjacent to the cracking valve 81 at a position between the cracking valve 81 and a liquid injection port 82. The protruding portion 355A is provided between the liquid injection opening 53A and a terminal opening 52A so as to be positioned between the liquid injection port 82 and the positive electrode current collector plate 4A. The protruding portion 354B is provided between the tip of the flat plate portion 51B and a terminal opening 52B so as to be laterally positioned adjacent to the cracking valve 81 at a position between the negative electrode current collector plate 4B and the cracking valve 81.

As shown in FIG. 8(b), the width of the facing surface of each of the protruding portions 354A, 355A, and 354B is smaller than the thickness of the flat wound group 3. The plurality of protruding portions 354A, 355A, and 354B are provided at predetermined intervals in the short direction of the positive electrode insulating plate 305A and in the short direction of the negative electrode insulating plate 305B. In the present example, the protruding portions 354A, 355A, and 354B have the same protruding height and width.

For example, when the battery lid 8 is more largely deformed in the case of only one protruding portion as in Example 1, the protruding portion bites into the curved surface portion 3a of the flat wound group 3, so that a gas discharge flow path may be narrowed by the deformed flat wound group 3. However, if the facing surface is enlarged in order to prevent the biting of the protruding portion, the cross-sectional area of a space formed between the curved surface portion 3a of the flat wound group 3 and the battery lid 8 becomes narrower, so that the gas discharge flow path becomes narrower.

On the other hand, in the present example, the plurality of protruding portions 354A, 355A, and 354B are provided at predetermined intervals in the short direction of the positive electrode insulating plate 305A and in the short direction of the negative electrode insulating plate 305B, which makes it possible to prevent the protruding portions 354A, 355A, and 354B from biting into the flat wound group 3, to prevent the gas discharge flow path from being narrowed. The plurality of protruding portions 354A, 355A, and 354B extending in parallel cause a gas to pass through between the protruding portions 354A, 355A, and 354B to secure a gas flow path to the cracking valve 81, so that the gas can be stably discharged from the cracking valve 81. The number and arrangement interval of the protruding portions 354A, 355A, and 354B are limited to the constitution of the present example as long as these can suppress the biting of the protruding portions 354A, 355A, and 354B into the flat wound group 3 and secure the gas discharge flow path.

### [Example 4]

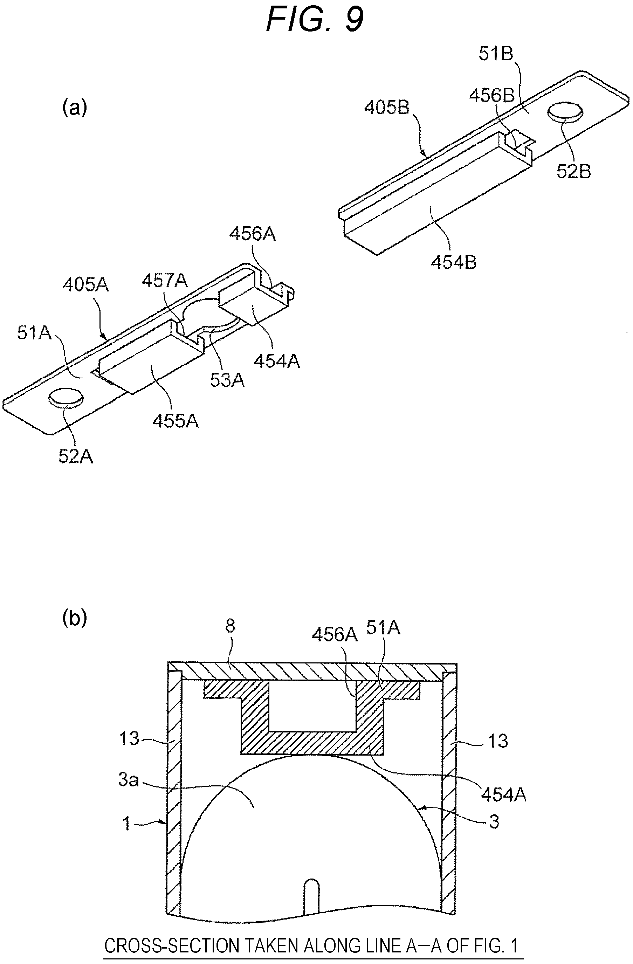

FIG. 9 illustrates the structure of an insulating plate in Example 4. It is to be noted that the same constituent elements as those in the above-described example are denoted by the same reference symbols, to thereby omit the detailed description thereof. The characteristic feature of the present example is that a space is provided between a facing surface of a protruding portion and a flat plate portion.

In the present example, the case where an insulating plate is constituted by two parts, that is, a positive electrode insulating plate 405A and a negative electrode insulating plate 405B will be representatively described. However, as in Example 2, the case where the insulating plate is constituted by one part can also be applied.

The positive electrode insulating plate 405A includes a base end interposed between a battery lid 8 and a positive electrode current collector plate 4A, extends toward the center in the longitudinal direction of the battery lid 8 along the lower surface of the battery lid 8, and includes a tip disposed at a position adjacent to a cracking valve 81. The negative electrode insulating plate 405B includes a base end interposed between the battery lid 8 and a negative electrode current collector plate 4B, extends toward the center in the longitudinal direction of the battery lid 8 along the lower surface of the battery lid 8, and includes a tip disposed at a position adjacent to the cracking valve 81.

On the positive electrode insulating plate 405A and the negative electrode insulating plate 405B, protruding portions 454A, 455A, and 454B are integrally provided. The protruding portions 454A, 455A, and 454B are provided to protrude toward a curved surface portion 3a of a flat wound group 3 from flat plate portions 51A and 51B, and the facing surface facing the curved surface portion 3a is positioned on a curved surface portion 3a side with respect to the cracking valve 81. In the present example, the protruding portions 454A, 455A, and 454B already abut on the curved surface portion 3a in a normal state before the battery lid 8 is deformed, but in the normal state, the protruding portions 454A, 455A, and 454B may face the curved surface portion 3a in a predetermined gap.

The protruding portion 454A is provided on the tip side of the flat plate portion 51A with respect to a liquid injection opening 53A so as to be laterally positioned adjacent to the cracking valve 81 at a position between the cracking valve 81 and a liquid injection port 82. The protruding portion 455A is provided between a liquid injection opening 53A and a terminal opening 52A so as to be positioned between the liquid injection port 82 and the positive electrode current collector plate 4A. The protruding portion 454B is provided between the tip of the flat plate portion 51B and a terminal opening 52B so as to be laterally adjacent to the cracking valve 81 at a position between the negative electrode current collector plate 4B and the cracking valve 81.

On the protruding portions 454A, 455A, and 454B, communicating paths 456A, 457A, and 456B extending along the longitudinal direction of the positive electrode insulating plate 405A and negative electrode insulating plate 405B and communicating between an end surface on one side in the longitudinal direction and an end surface on the other side in the longitudinal direction are formed. The communicating paths 456A, 457A, and 456B are formed by a male type disposed to protrude into the protruding portions 454A, 455A, and 454B from the side of the flat plate portions 51A and 51B when the positive electrode insulating plate 405A and the negative electrode insulating plate 405B are molded in a mold tool.

By the communicating paths 456A, 457A, and 456B, a space is formed between each of the facing surfaces of the protruding portions 454A, 455A, and 454B and the flat plate portions 51A and 51B. The space connects a space formed between the cracking valve 81 of the battery lid 8 and the curved surface portion 3a of the flat wound group 3, and a space formed between a narrow side surface 14 of a battery can 1 and an end surface in the winding axis direction of the flat wound group 3 to each other. The space can secure a gas discharge flow path without being narrowed by the wound group 3 under the deformation of the battery lid 8, and can stably discharge a gas from the cracking valve 81.

For example, in the constitutions of Examples 1 and 2, when the battery lid 8 is more largely deformed, the protruding portions 54A, 55A, and 54B bite into the wound group 3, so that the gas discharge flow path between the battery lid 8 and the deformed wound group 3 may be narrowed by the wound group 3. On the other hand, in the present example, the space is secured by the communicating paths 456A, 457A, and 456B of the protruding portions 454A, 455A, and 454B, and the gas flow path to the cracking valve 81 in the battery can 1 is secured.

### [Example 5]

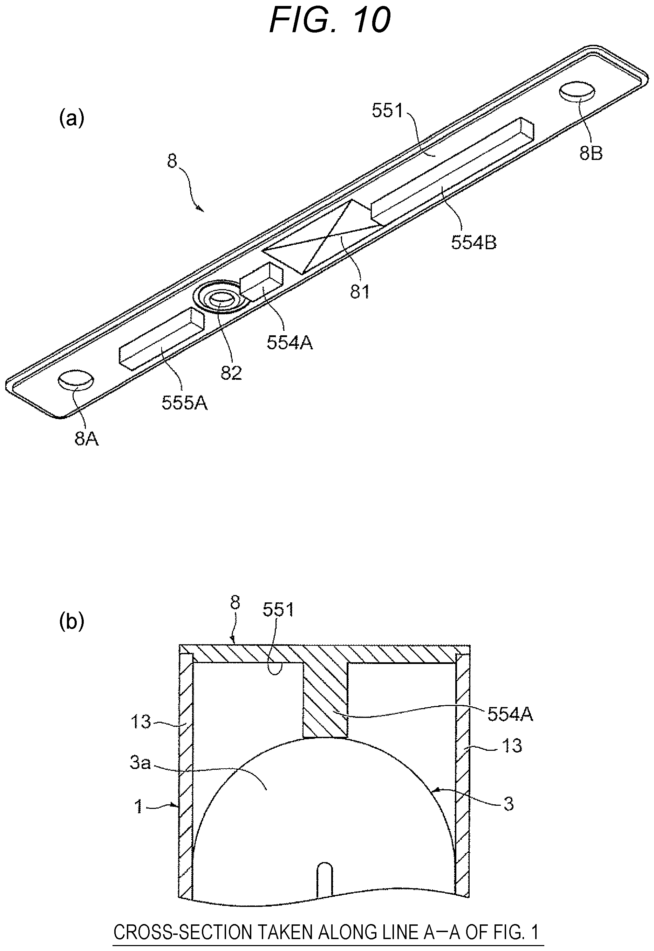

FIG. 10 illustrates the structure of a battery lid in Example 5. It is to be noted that the same constituent elements as those in the above-described example are denoted by the same reference symbols, to thereby omit the detailed description thereof. The characteristic feature of the present example is that a protruding portion is provided on a battery lid.

In the present example, a positive electrode insulating plate (not shown) has a size so as to be interposed between a positive electrode current collector plate base portion 41A and a battery lid 8. A negative electrode insulating plate has a size so as to be interposed between a negative electrode current collector plate base portion 41B and the battery lid 8.

Protruding portions 554A, 555A, and 554B are integrally provided on the battery lid 8. The protruding portions 554A, 555A, and 554B are provided to protrude toward a curved surface portion 3a of a flat wound group 3 from a lower surface 551 of the battery lid 8. A facing surface facing the curved surface portion 3a is positioned on a surface portion 3a side with respect to a cracking valve 81. In the present example, the protruding portions 554A, 555A, and 554B already abut on the curved surface portion 3a in a normal state before the battery lid 8 is deformed, but in the normal state, the protruding portions 554A, 555A, and 554B may face the curved surface portion 3a in a predetermined gap.

The protruding portion 554A is provided between a cracking valve 81 and a liquid injection port 82 so as to be laterally positioned adjacent to the cracking valve 81. The protruding portion 555A is provided at a position between the liquid injection port 82 and an opening 8A. The protruding portion 554B is provided at a position between the cracking valve 81 and an opening 8B so as to be laterally positioned adjacent to the cracking valve 81.

As described above, the protruding portions 554A, 555A, and 554B are disposed to face the curved surface portion 3a of the flat wound group 3, and in particular, the protruding portion 554A of a positive electrode insulating plate 5A and the protruding portion 554B of a negative electrode insulating plate 5B are disposed at adjacent positions on both sides of the cracking valve 81. Therefore, even if impact is applied to the rectangular secondary battery 100 to cause the deformation of the battery lid 8 toward the flat wound group 3 side, for example, the blockage of the cracking valve 81 due to the flat wound group 3 caused by the abutment of the battery lid 8 on the flat wound group 3 can be prevented. This makes it possible to secure a gas flow path until a gas in the battery can 1 reaches the cracking valve 81, to stably discharge the gas from the cracking valve 81.

According to the present example, the protruding portions 554A, 555A, and 554B are merely formed on the battery lid 8 as compared with the case where the protruding portion is disposed on the battery lid 8 by disposing the part having the protruding portion as in the above-described respective Examples, which makes it possible to easily dispose the protruding portion. The number of parts can be reduced as compared with the case where the protruding portion is separately provided, which can provide an improvement in the ease of assembly.

While the embodiments of the present invention have been described above in detail, the present invention is not limited to the embodiments, and various changes in design can be made within a range not deviating from the spirit of the claims of the present invention. For example, the embodiments described above have been described in detail to clearly explain the present invention, and the present invention is not limited to those having the entire configurations described above. Apart of the configuration of an embodiment is replaceable with a part of the configuration of another embodiment, and a part of the configuration of an embodiment can be added to a part of the configuration of another embodiment. Further, with respect to a part of the configuration of each embodiment, addition of another configuration, deletion, and replacement can be made. Reference Signs List

100 rectangular secondary battery
101 gas discharge duct
1 battery can
3 flat wound group
3a curved surface portion
8 battery lid
11 opening
54A, 54B, 55A protruding portion
81 cracking valve
82 liquid injection port

## Claims

1. A rectangular secondary battery comprising:
a battery can;
a flat wound group including a curved surface portion disposed on a side of an opening of the battery can; and
a battery lid sealing the opening and having a cracking valve and a liquid injection port, wherein
at least a protruding portion is disposed on the battery lid between the liquid injection port and the cracking valve, and
the protruding portion has a facing surface positioned on a curved surface portion side with respect to the cracking valve.

2. The rectangular secondary battery according to claim 1, wherein a width of the facing surface is smaller than a thickness of the flat wound group.

3. The rectangular secondary battery according to claim 2, wherein the protruding portion is provided on each of both sides of the cracking valve.

4. The rectangular secondary battery according to claim 3, wherein protruding portions provided on both sides of the cracking valve are provided to be connected to each other.

5. The rectangular secondary battery according to claim 3, wherein the protruding portion is a part of the battery lid.

6. The rectangular secondary battery according to claim 3, wherein the protruding portion is different from the battery lid.

7. The rectangular secondary battery according to claim 6, wherein the protruding portion is made of a metal.

8. The rectangular secondary battery according to claim 6, wherein the protruding portion is a part of an insulating member provided between a current collector plate connected to the flat wound group and the battery lid.

9. The rectangular secondary battery according to any one of claims 6 to 8, wherein a space is provided between the facing surface of the protruding portion and the battery lid.

10. A rectangular secondary battery comprising:
a battery can housing a flat wound group so that a curved surface portion of the flat wound group is positioned on a side of an opening; and
a battery lid closing the opening and having a cracking valve, wherein
a duct abutting portion on which a gas discharge duct abuts is provided around the cracking valve of the battery lid, and
a protruding portion having a facing surface positioned on a curved surface portion side with respect to the cracking valve is provided between the duct abutting portion and the curved surface portion.
